# EUROPEAN PATENT APPLICATION

(11) **EP 1 127 678 A1**
(43) Date of publication of application: **29.08.2001**
(21) Application number: 00301428.9
(22) Date of filing: 23.02.2000
(51) Int. Cl.: B29C 70/24, B29C 65/50

(54) **Reinforced joint**

(71) Applicant: BRITISH AEROSPACE PUBLIC LIMITED COMPANY, Farnborough, Hampshire GU14 6YU (GB)
(72) Inventor: The designation of the inventor has not yet been filed
(74) Representative: Edis, Ronald Malcolm

(57) **Abstract**

A bonded joint 40 comprises first and second pre-cured laminated members 42, 44 having opposed joining faces 48, 50 and a layer of adhesive 52 therebetween. A plurality of pins 46 extend through each laminated member 42, 44 and into the adhesive layer 52. The pins 46 reinforce the laminated members 42, 44 and increase their resistance to delamination in the regio of the joint 40 due to stress inducing loads. The pins 46 may be provided flush with the joining face 48, 50.

## Description

The present invention relates to the reinforcement of joints in laminated composite structures, and in particular, though not exclusively, to joints in laminated composite structures of aircraft.

Composite laminates are weak in their through thickness direction and susceptible to failure due to tension sheer and peel stresses. Bonded joints between laminated members are also prone to similar weaknesses. Experience has shown that failure in bonded joints tends not to occur in the adhesive interface between the members but in the members themselves. Typically failure is by delamination between the first and second plys of the laminate member.

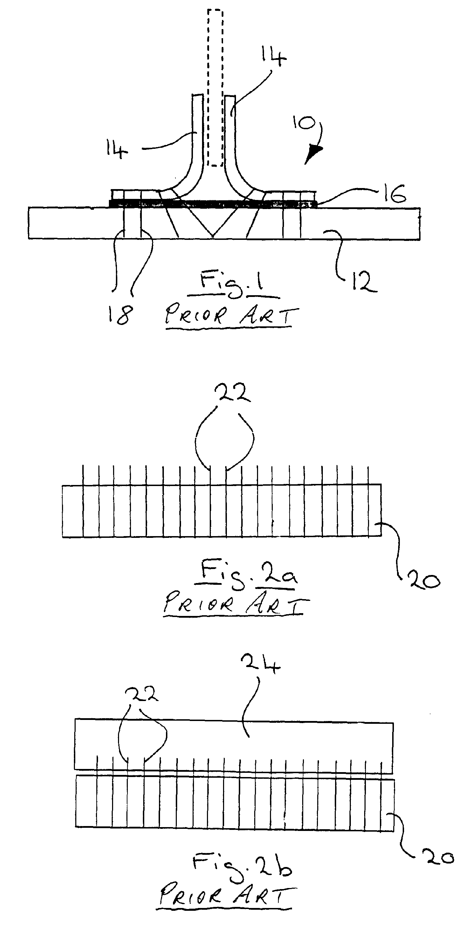

One solution to the above mentioned problem of delamination is shown in figure 1 which shows a cross-section through a joint, generally designated 10, comprising a skin 12 and upstand members 14, and an intermediate adhesive layer 16. To strengthen the joint 10, there are provided pins 18 which extend between the skin 12 and upstand members 16 and through the adhesive layer 16. A disadvantage of this arrangement is that upstand members 14 have to be co-cured with the skin 12, which may present problems if the skin 12 and upstand members 14 are to be sourced from different suppliers in an uncured state, and a curing operation must be carried out to join the components. It should be noted that the adhesive layer 16 is optional when co-curing composite components as the resin impregnated in the components will form a bond of its own. The adhesive layer 16 improves the strength of the joint 10 by modifying the local stress distribution.

Continuing with the example of the joint 10 described above, it is a preferred manufacturing method to either cure the skin first and then co-bond the upstand members or vice versa. To this end a joint of the type shown in figures 2a and 2b has been proposed. A first pre-cured laminated member 20 is provided with pins 22 extending therethrough and projecting outwardly from one side. A second laminated member 24 is then positioned over the first member 20 such that the pins 22 penetrate the second member 24. The second member 24 is then co-cured to the first member 20.

The pin lengths may be chosen either fully or partially penetrate the thickness of the second member 24. A problem with this proposed solution is that the members 20,24 must supplied in a cured and uncured states respectively, and an additional curing step still must be carried out to assemble the members 20, 24.

According to a first aspect of the present invention there is provided a pre-cured laminated component having a bonding face adapted to be bonded by a layer of adhesive to another article, the laminated component having elongate reinforcing means extending through the thickness thereof towards the bonding face.

The reinforcing means reinforce the plys of the laminated member in the region of the bond and thus reduce the possibility of stress induced failure due to de-lamination of the laminated member.

The reinforcing means may extend completely or partially through the thickness of the laminated component. In a preferred embodiment the reinforcing means comprises a pin-like member. Preferably the laminated component is provided with a plurality of spaced pin-like members. The reinforcing means may be equidistantly spaced or grouped in a predetermined manner. The configuration of such a grouping may be dependent upon anticipated stress levels in the bond, and/or the component.

In one embodiment the reinforcing means terminate at the bonding face of the laminated component. In an alternative embodiment the reinforcing means extend outwardly from the bonding face and, in use, into the adhesive layer. In such an embodiment the reinforcing means projects from the bonding face a distance equal to or less than the thickness of the adhesive layer. The laminated component may be provided with a combination of reinforcing means terminating at the bonding face and extending beyond the bonding face.

According to a second aspect of the present invention there is provided a bonded joint assembly comprising a first pre-cured laminated member having a bonding face, a second pre-cured laminated member having a bonding face and a layer of adhesive interspersed between said bonding faces wherein at least one of said laminated members comprises a component according to the first aspect of the invention.

Each of the laminated members may be provided with a pin-like member. In such an embodiment the pin-like members of each laminated member may be substantially parallel. The pin-like members may be co-linear.

According to a third aspect of the present invention there is provided a method of reinforcing a pre-cured laminated member in the region of an adhesive bond, the method comprising the steps of:
providing a laminated member having a bonding face;
providing an elongate reinforcing means in the laminated member, said reinforcing members extending through the thickness of the laminated member in the direction of the bonding face;
curing the laminated member; and
bonding the cured laminated member with a layer of adhesive at the bonding face.

The step of providing the reinforcing means in the laminated member may include the step of positioning the reinforcing means such that it terminates flush with the bonding face. In an alternative embodiment the reinforcing means is positioned such that it extends from the bonding face a distance equal to or less than the adhesive layer thickness.

Embodiments of the invention will now be described with reference to the accompanying drawings in which:
Figure 1 shows a cross-sectional side view of a first prior art joint type;
Figures 2a and 2b show cross -sectional side views of a second prior art joint type;
Figure 3 and 4 show cross-sectional side views of a joint in accordance with a first embodiment of the invention; and
Figure 5 shows a cross-sectional side view of a joint in accordance with a further embodiment of the present invention.

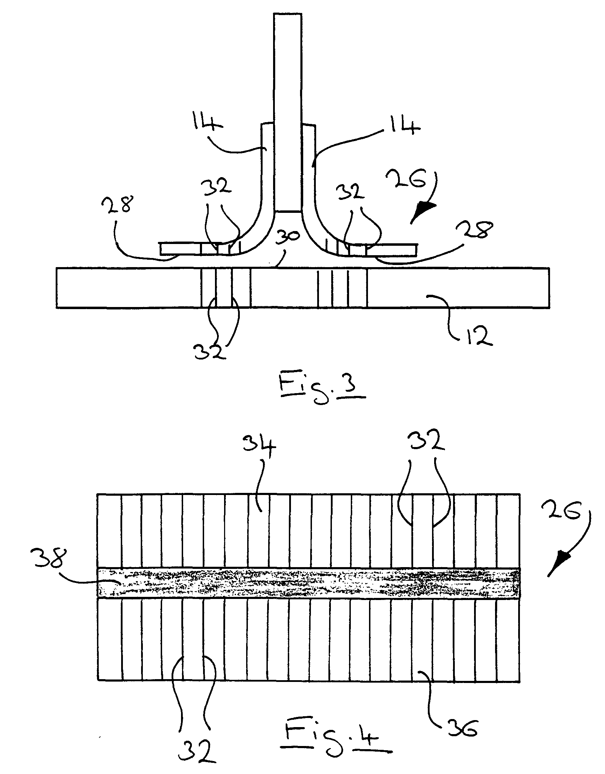

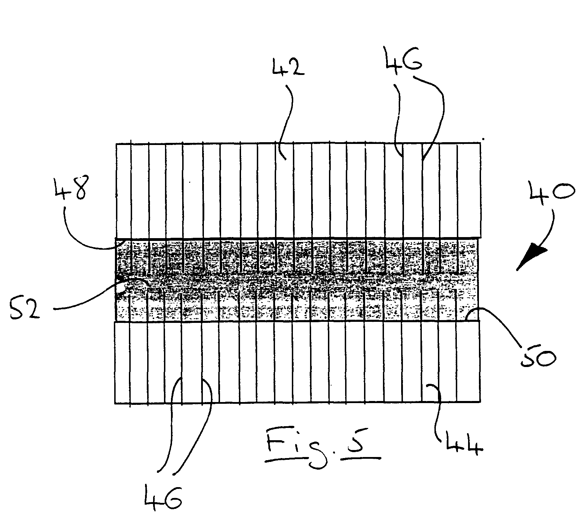

Referring now to figures 3 and 4 there is shown a joint, generally designated 26, in accordance with an embodiment of the present invention. Figure 3 shows a skin 12 and upstand 14 arrangement as described above in relation to the prior art. Both the skin 12 and upstand members 14 have opposing joining faces 28, 30 between which the joint 26 is made. The skin 12 and upstand members 14 are shown to be separated and without an intermediate adhesive layer for the purpose of clarity in describing the joint 26. Both the skin 12 and upstand members 14 are provided with reinforcing pins 32 however, in contrast to the prior art, the pins do not extend across the joint 26 but terminate at the respective joining faces 28, 30.

In use, the pins 32 are inserted into the skin 12 and upstand members 14, and the skin and upstand members 12,14 are then pre-cured. The joint 26 can then be made by a simple adhesive bonding operation at an assembly site as opposed to a more complex curing operation. The skin and upstand members 12,14 can be sourced from different suppliers and the need for liaison therebetween with regard to compatibility of uncured sections, pin position and penetration depth is eliminated. Figure 4 shows a close-up view of the above described joint 26 between two members 34,36 and includes the adhesive layer 38.

Figure 5 shows an alternative joint, generally designated 40, between two pre-cured members 42, 44. Here, the reinforcing pins 46 do not stop at the joining faces 48, 50 but project into the adhesive layer 52. This arrangement improves mechanical keying, increases the effective surface area of the joint 40 and provides a mechanical means for transferring load between the joining faces 48,50 which reduces stress peaks. In figure 5 the pins 46 of each respective member 42, 44 are aligned with those of the other. It will be understood that the pins 46 could equally be arranged so as to be out of register with one another. Also, the pre-cured members 42, 44 may be provided with a mixture of pins 46 which both terminate at and project from the respective joining faces 48, 50.

## Claims

1. A pre-cured laminated component having a bonding face adapted to be bonded by a layer of adhesive to another article, the laminated component having elongate reinforcing means extending through the thickness thereof towards the bonding face.

2. The component of claim 1 wherein the reinforcing means extends partially through the thickness of the laminated component.

3. The component of claim 1 or claim 2 wherein the reinforcing means comprises an elongate pin-like member.

4. The component of claim 3 wherein the pin-like member terminates at the bonding face of the laminated component.

5. The component of claim 3 wherein the pin-like member extends outwardly from the bonding face a distance equal to or less than the thickness of an adhesive layer used to bond the component to another article.

6. The component of claims 3 to 5 wherein the component is provided with at least two spaced pin-like members.

7. The component of claim 6 wherein said pin-like members are equidistantly spaced.

8. The component of claim 6 wherein said pin-like members are grouped in a predetermined pattern.

9. A bonded joint assembly comprising a first pre-cured laminated member having a bonding face, a second pre-cured laminated member having a bonding face and a layer of adhesive interspersed between the bonding faces wherein at least one of said laminated members comprises a component according to any preceding claim.

10. The bonded joint assembly of claim 9 comprising two said components wherein the pin-like member of each component is substantially parallel with respect to the other.

11. The bonded joint assembly of claim 10 wherein the pin-like member of each component is co-linear.
